# EUROPEAN PATENT SPECIFICATION

(11) **EP 4 378 190 B1**
(45) Date of publication and mention of the grant of the patent: **28.10.2026**
(21) Application number: 22747741.1
(22) Date of filing: 25.07.2022
(51) Int. Cl.: H04W 12/50, H04W 4/70, H04W 12/041, H04W 12/043, H04W 12/069, H04W 12/61

(54) **WAKING UP A DEVICE**
AUFWECKEN EINER VORRICHTUNG
RÉVEIL DE DISPOSITIF

(30) Priority: 26.07.2021 GB 202110715
(43) Date of publication of application: 05.06.2024
(73) Proprietor: Vodafone Global Enterprise Limited, Newbury Berkshire RG14 2FN (GB); Dabco Limited, Newbury, Berkshire RG14 2FN (GB)
(72) Inventor: BOURNE, Sophie Nicole, London, Greater London W2 6BY (GB); SNAPE, Timothy, London, Greater London W2 6BY (GB); TRICKEY, Daniel George, London, Greater London W2 6BY (GB)
(74) Representative: Boult Wade Tennant LLP
(86) International application number: PCT/GB2022/051940
(87) International publication number: WO 2023/007135

(56) References cited:
- EP-A1- 3 119 055
- WO-A1-2013/009345
- US-A1- 2016 234 182

## Description

### Field of the Invention

The present invention relates to a method and system for waking up devices for communication with a server.

### Background of the Invention

Devices and in particular machine to machine (M2M) devices may be used in many different situations and incorporated into a variety of different items and hardware. Typically these managed devices will have low computing resources, be restricted in power and have restricted functionality. Nevertheless, large networks of such devices may be developed that require maintenance, control and other interaction that require communication with a device manager or other servers.

Due to the nature of the devices and their limited resources in both power and computing potential, it is often necessary to keep the devices powered down, in a reduced power state or in a dormant state until they are required (e.g. to provide a reading or to accept a command). Devices may be scheduled to power up at certain times or intermittently. However, if information is required from such devices or if control or other management information needs to be sent outside of such scheduled operation times then this approach has drawbacks. Alternatively, some form of communication between the managed devices and their device manager may be maintained but this requires additional power and bandwidth especially for large networks of managed devices. Furthermore, secure communications with the devices is required whilst limiting system resources and power consumption.

Therefore, there is required a method and system for communicating with devices that overcomes these problems.

EP 3119055 describes a method and system for communicating securely with user equipment using generic bootstrapping architecture, the system comprising a bootstrapping server function.

US 2016/0234182 describes establishing secure communications between a NAF and an M2M device by tunnelling a data object to the M2M device via an interface between the NAF and the M2M device.

### Summary of the Invention

The invention is defined by the appended claims.

A device, such as a machine to machine (M2M) or internet of things (IoT) device, may be powered using a battery or other long term power source. In some cases, this power source may not be easily replaced or replenished. Therefore, power management is important, especially for devices intended to be in place for several years. One technique to achieve this is to power down or sleep the device (e.g. in a low power mode or a mode that does not include powering one or more communications interfaces) for periods and only have the device operating (or in a high power mode that is higher than the low power mode) for short or intermittent periods of time. The device may include a timer or schedule to achieve this. However, communication with the device may be required during the time scheduled for sleep or when in the low power mode. Furthermore, communication with the device may not be required when it is scheduled to be awake or in the high power mode. In this case, waking up the device may simply waste power and other system resources.

Therefore, there is a need to wake up the device when communications are required and such communications need to be secured, whilst keeping power requirements low. For example, these communications may be to provide data, such as sensor data, from the device to a server. At such occasions, a wake-up condition or message may be initiated. Because communications with the device needs to be secured then it is also necessary to provide security credentials to the device. However, preferred security protocols, such as TLS, DTLS, SSL etc. typically require a certificated authority (CA) and communications with CAs require further messaging and communications (e.g. to exchange certificates) that have their own power and bandwidth requirements.

Rather than sending the security credentials separately, the wake up message can have a dual purpose; it can both wake up the device and it can include the security credentials in the form of generic bootstrapping architecture (GBA) push information (GPI). The wake-up message itself does not need to be secured (although in some cases it may have its own security). The wake-up message contains GPI so that the communication channel between the device and the server can be secured using a security protocol that usually involves a CA but because the security credentials are sent as part of the GPI within the wake-up message then no CA or certificate exchange is required for authentication. It is also easier to transmit key material to the server (e.g. for providing keys) than with the device. Furthermore, the device only needs to be able to process GBA, which can be optimised for low powered and resourced devices, and does not need to be able to process or store security certificates.

The security credentials within the GPI are authenticated or validated and this results in a key (e.g. a Ks_NAF). The key is then used to secure communications between the device and the server. Preferably, the device contains a SIM, USIM or UICC. The use of GBA in this way has an advantage that certificates are not required (or their authentication) and keys can be derived from data on a SIM or UICC. Preferably, the SIM or UICC is used as a hardware token on the device to manage credentials and/or the derivation of credentials. In some example implementations, the secure communication channel may be secured using TLS or other certificate-based protocols. Therefore, such protocols can be set up without certification.

Whilst the wake-up message is preferably in the form of an SMS, it may take other forms, as GPI may be distributed in other ways. The SMS itself may be unsecured or secured. Using an unsecured SMS reduces processing overheads but does not reduce the security of the secure communication channel because this is already secured by GBA with the unsecured SMS being used to transport the GPI (and security credentials) only.

In accordance with a first aspect, there is provided a method as described in claim 1. Therefore, good security can be maintained without requiring certificate messaging and associated overheads.

Preferably, the GPI may be obtained from a network application function, NAF. Therefore, the method can be used with existing GBA infrastructure, although other mechanisms can be used.

Optionally, the server may initiate the device wake-up message by issuing an application programming interface, API, instruction or call to a separate device. This separate device may be an API hub, for example. The API hub can in turn manage interactions with other telecommunications infrastructure.

Advantageously, the GPI may be obtained by the separate device in response to receiving the API instruction from the server. For example, when the separate device receives the API instruction, it may either interact with a Network Application Function, NAF to obtain the GPI data, or it may perform the NAF steps itself.

Whatever process that is used to create the GPI data, it may be incorporated into a wake-up message for transmission to the device.

Preferably, the wake-up message may be an SMS message. However, the wake-up message can be sent and received (e.g. over different communication channel types) in different formats (e.g. a fixed line, a call, etc.).

Optionally, the method may further comprise the step of:
in response to receiving the wake-up message the device changes state before establishing the secure communication channel.

Preferably, the device may change state from a first power state to a second power state, wherein the power used by the device in the first power state is less than the power used by the device in the second power state. Therefore, this can preserve battery power and extend the life of the device.

Optionally, the device may be a machine to machine, M2M, device. The device may also be an internet of things (IoT) device.

Upon receipt of a wake-up message containing a GPI block of data, the device may perform a GAA server function authentication using the received GPI data block and derive a Ks_NAF key (or other key) as the authentication result.

The device may then use the derived Ks_NAF key as the input to a TLS function and this may be used to initiate a secured client connection with the server (e.g. application server).

Optionally, the established secure communication channel may be TLS, SSL, DTLS, QUIC, QUIC PSK, or QUIC 0-RTT. Other certificate-based protocols may be used but without requiring a certificate authority.

Preferably, the step of authenticating the security credentials within the GPI to obtain the key may further comprise the steps of the device authenticating the GPI with a bootstrapping sever function, BSF, and on successful authentication receiving the key from the BSF. Therefore, existing GBA infrastructure can be utilised.

Optionally, the server may be a device manager, DM, server. However, the server can take other forms and perform other functions.

Optionally, the wake-up message may be initiated at predetermined intervals and/or on expiry of a previously obtained key. Different mechanisms can be used to initiate the wake-up message. These can be scheduled or ad-hoc.

Optionally, the server initiates the device wake-up message in response to a request originating at the device. Therefore, some component or aspect of the device can control how and when the remaining components (e.g. communications interfaces) are powered and activated.

Optionally, the method may further comprise the steps of the device sending the server a wake me up message when in a low powered state, the low powered state being at a power lower than an operating power. This further message or signal may be sent over the same communication type and channel as the wake-up message (e.g. SMS) or as a different message type, for example.

Optionally, in the example implementation with the device initiating its own wake-up, by sending a wake me up message (or request in another form), the wake me up message may be communicated to the application server with the transmission of no data (or very little data). In this case, the protocols involved may request a data connection to be established between the initiating device and the application server and once the connection is established, then it may be closed by the device (for example, immediately or after a short time period) and all resources released. In this mode of operation, the communications components may communicate the identity of the calling device to the server, applications server (or API server), this identity information may then be used to obtain the GPI data via the NAF server or otherwise.

Optionally, the wake-up message to the device and/or a wake-me-up message from the device may include data indicating a wake-up delay. Therefore, this provides further control over how and when the device wakes-up and/or resumes communications with the server.

Advantageously, the method may further comprise the step of the device delays establishing the secure communication channel with the server for a period based on the data indicating the wake-up delay. The delay may be achieved using other mechanisms.

Optionally, the wake-up message may include data indicating a wake-up type of a plurality of wake-up types.

Optionally, the method may further comprise the step of establishing the secure communication channel between the device and the server according to a procedure determined by the wake-up type within the wake-up message. Different types may include waking up immediately, waking up after a delay, and waking up at a specified time, for example.

Optionally, the step of establishing the secure communication channel between the device and the server may further comprise providing the server with an identifier of the device. For example, this may be an IMSI, IMEI or other identifier.

Optionally, the wake-up message may be re-sent to the device or a new wake-up message is sent to the device if the device fails to respond within a predetermined time. This may improve reliability.

Optionally, the message may be associated with a timestamp and the method may further comprise the step of triggering the wake-up message to be resent or a new wake-up message to be sent to the device if the server does not have a record of the establishment of the secure communication within the predetermined time from the timestamp. Such a timestamp may be the timestamp of the message itself (e.g. the SMS) or timestamp data within the message.

In accordance with a second aspect, there is provided a system as described in claim 12.

Preferably, the system may comprise: a server; and
one or more devices. There may also be a plurality of servers associated with groups of devices or to provide load balancing and redundancy, for example.

Preferably, the system may further comprise:
an application programming interface, API, hub configured to receive from the server a command to initiate the device wake-up message and in response send the device wake-up message to the device.

Advantageously, the system may further comprise:
a network application function, NAF, configured to provide the GPI. The GPI may be provided directly from the NAF or through an intermediate source or provider such as a server or API hub, for example.

In accordance with a third aspect, there is provide a computer program comprising instructions which, when the program is executed by a computer, cause the computer to carry out the steps of the methods described above.

The methods described above may be implemented as a computer program comprising program instructions to operate a computer. The computer program may be stored on a computer-readable medium.

The computer system may include a processor such as a central processing unit (CPU). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
Fig. 1 shows a high-level sequence diagram of a process for sending a wake-up message to a device from a server;
Fig. 2 shows a schematic diagram of an example device management system;
Fig. 3 shows a flowchart of an example method for communicating between a device and a server;
Fig. 4 shows a sequence diagram of an example implementation of a method for sending a wake-up message to a device;
Fig. 5 shows a sequence diagram of an alternative example method for sending a wake-up message to a device;
Fig. 6 shows a sequence diagram of an alternative example method for sending a wake-up message to a device; and
Fig. 7 shows a sequence diagram of an alternative example method for sending a wake-up message to a device.

It should be noted that the figures are illustrated for simplicity and are not necessarily drawn to scale. Like features are provided with the same reference numerals.

### Detailed description of the preferred embodiments

Generic bootstrapping architecture (GBA) push information (GPI) can be distributed using any suitable means. GPI can contain security credentials that may be used to derive keys. A network application function (NAF) can provides such GPI to devices. Generic authentication architecture (GAA) enables the authentication of the GPI resulting in an authentication result (e.g. a key or other cryptographic material). In the following example implementations, SMS is used to distribute GPI to devices but it should be noted that other techniques can be used (e.g. WiFi, fixed telephone lines, etc.).

Furthermore, the devices described in these example implementations are machine to machine (M2M) devices or internet of things (IoT) devices but other device types may be used with the described techniques and systems. Whilst these devices typically have low computing and power resources, the data that they collect and transmit needs to be secured. For example, these data may include utility data usage data or infrastructure sensor data. Therefore, a secure communications protocol is necessary to transmit these data from the devices. Furthermore, in order to keep power requirements and bandwidth usage to low levels then such devices (which are typically battery powered, which may or may not be changeable or rechargeable) can be put into a low power mode or a sleep mode. The low power mode uses less power than a higher power mode when further communications interfaces are powered and in use. However, the low and high power modes may affect other components as well as the communications interfaces. Timers and schedules may be incorporated into the devices so that they wake-up periodically. However, there can be a need to communicate with such devices (or put them into higher power modes for other reasons) outside of these schedules. For instance, firmware updates may be required or instantaneous data may need to be collected requiring immediate or at least a quicker resumption of communications with the device. Therefore, in addition or alternatively to the wake-up schedule, the devices can receive wake-up messages that cause the device to switch from the low power mode to a higher power mode and/or a mode that enables communication with a server or other entity to take place.

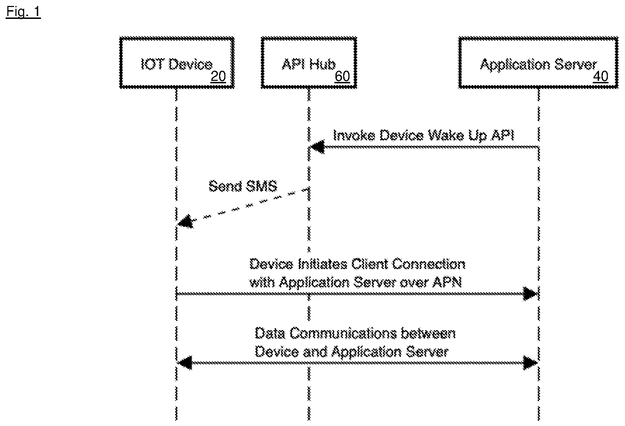

Figure 1 shows a sequence diagram of a high-level method for waking up a device 20. This Figure shows an application server 40, although any server type may be used or incorporated. The application server 40 initiates a device wake-up message by invoking an application programming interface (API) call to an API hub 60. Again, other mechanisms may be used to initiate the wake-up message, either within the server or external to it. The API hub 60 responds to the API call by generating an SMS using telecommunications infrastructure (not shown in this figure). The device 20 contains a UICC or SIM and telecommunications components that enable it to receive the SMS even in a low powered state. The SMS may be directed to a single device (i.e. based on its mobile number) or a plurality of SMSs may be sent to wake-up groups of devices simultaneously or all devices in a particular network of devices.

In response to receiving the SMS, the device 20 initiates a client connection with the application server 40. This may be over an access point name (APN) or other telecommunications infrastructure. Therefore, data communications between the device 20 and the application server 40 may commence. Therefore, the wake-up message causes the device 20 to change state and waking up can involve carrying out more on-board processes than in the low powered, sleep or dormant state (where minimal or fewer processes are carried out, including monitoring for or the ability to receive the wake-up message). The communication channel carrying the wake-up message may be secured or unsecured depending on the particular application.

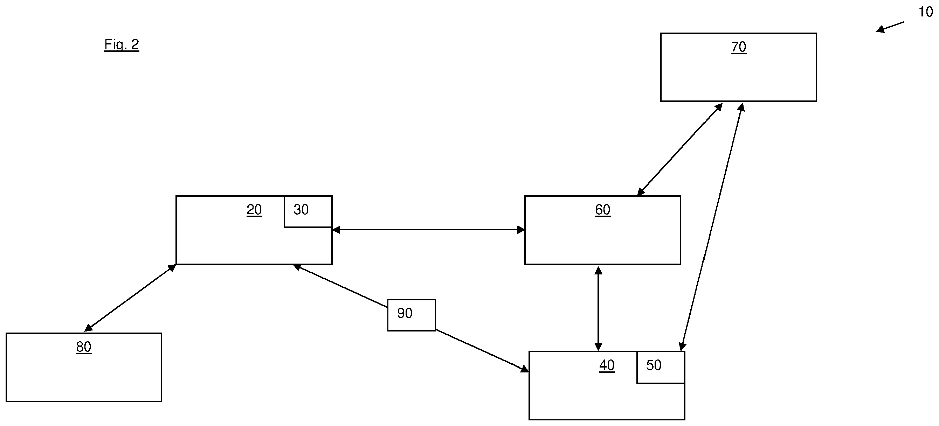

Figure 2 shows a schematic diagram of a system 10 for implementing an example wake-up procedure. The device 20 includes a UICC or SIM 30 and the server 40 includes a communications interface 50. The API hub 60 is shown in this figure receiving the API calls from the server 40 and initiating the SMS sent to the device 20. However, in this example implementation, the API hub 60 obtains GPI (containing security credentials or information from which to derive such security credentials) from a GBA NAF server or NAF push server 70, for example. The API hub 60 can therefore incorporate the GPI into the SMS that is then sent to the device 20. The GPI includes security credentials used directly or indirectly to secure the communications between the device 20 and the application server 40. This is achieved by the device 20 authenticating the GPI with a generic authentication architecture (GAA) server 80. This authentication results in a key 90 used to secure communications between the device 20 and the server 40.

The particular security protocol used to secure the communications between the device 20 and the server 40 is a security protocol that would otherwise use a security system of certificates and a certificate authority (CA) in order for the device 20 and server 40 to authenticate each other and obtain the shared key 90. However, no CA or certificate processing is required, as the security credentials are already included within the GPI and made available to both the device 20 and the server 40 using the NAF 70 (or otherwise).

As can be seen from this figure, the NAF 70 also shares the security credentials with the server 40. Alternatively, the key 90 may be directly shared with the server 40 either from the API hub 60 or from elsewhere. Therefore, the server 40 does not need to process the GPI or security credentials (or receive them). In either case, no CA or certificate process is necessary.

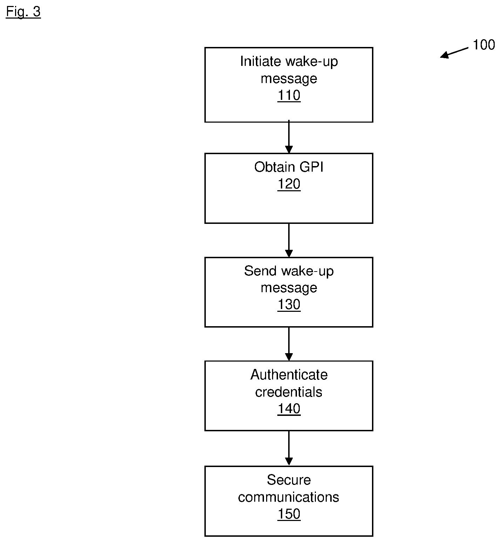

Figure 3 shows a flowchart of a method 100 for communicating between the device 20 and the server 40. At step 110 a wake-up message is initiated. This may be by the server 40 directly or by another entity causing the server 40 to initiate the process. In some example implementations, the initiation may come from the device 20 itself. In this case, a process carried out within the device 20, with the device 20 in sleep mode, may trigger this initiation. Waking up the device 20 internally may waste resources whilst the device 20 waits to receive or obtain the key 90 to secure communications with the server 40. Therefore, the described wake-up procedure retains advantages even when originating from the device 20 itself.

At step 120 the GPI is obtained. This may be from the NAF 70 or another entity. The GPI is incorporated into the wake-up message, which is sent to the device at step 130. The credentials are authenticated at step 140. This may be by the device 20 and/or the server 40. In an example implementation, this authentication may be achieved using GBA and/or by using the SIM or UICC 30 within the device 20. The result of this authentication is the key 90 or material to derive the key 90 (e.g. using its UICC or SIM 30).

The key 90 is used to secure communications between the device 20 and the server 40 at step 150. The method 100 can be used with a different key 90 every time the wake-up message is sent or the key 90 may be changed as often as required (e.g. the wake-up message can include the security credentials within the GPI only on some occasions when a wake-up message is sent or every time). Therefore, the increased security of using different keys (e.g. regularly or always) does not increase the necessary computing, bandwidth or power resources (at least for the device 20) significantly.

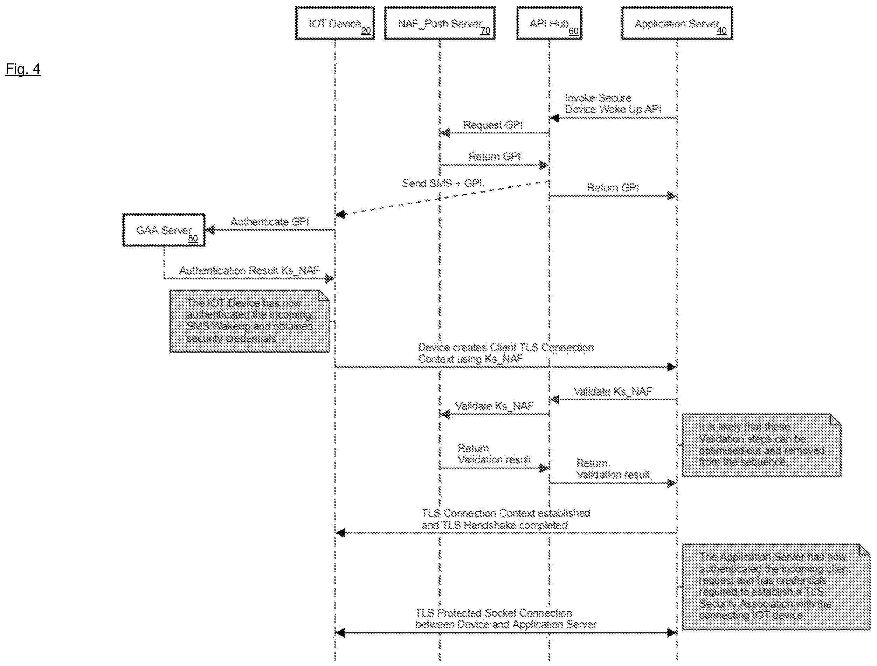

As noted previously, different certificate-based security protocols may be used to secure communications between the device 20 and the server 40. Figures 4, 5, 6 and 7 show particular example implementations of the use of different security protocols and particular alternative method steps used to set up these security protocols and secured communications.

Figure 4 shows how a transport layer security (TLS) security protocol communication is set up between the device 20 and the server 40. This figure shows a sequence diagram, including various example steps that may be used as part of this process. In a similar way to the method described with reference to Figure 3, the application server 40 initiates a wake-up procedure (or responds to an external request to wake-up a device or group of devices) or creates a wake-up message using an API call to the API hub 60. Again, the API hub 60 requests the GPI from the NAF push server 70, which is then returned to the API hub 60 in response to this request. In this example implementation, the API hub 60 also returns the GPI to the application server 40 so that its own authentication of the GPI can be made (e.g. with the GAA 80 or otherwise) resulting in a Ks_NAF key being made available to the server 40. An SMS (including the GPI with security credentials) is sent to the device 20.

As described above, the GAA server 80 is used by the device 20 (and in some example implementations, the server 40) to authenticate the GPI and security credentials. In this example implementation, the result of this authentication is the same Ks_NAF key made available to the server 40 (either transferred to it or derived as an authentication result).

The device 20 and server 40 now have in their possession a key 90 that can be used to create a TLS connection with each other without having to use a CA. The device 20 does this by creating a client TLS connection context using the Ks_NAF. The server 40 validates the Ks_NAF via the API hub 60 at the NAF push server 70. The NAF push server 70 returns a validation result to the application server 40, again through the API hub 60.

The TLS connection context is established and a TLS handshake is completed from the application server 40 to the device 20. This results in a TLS protected socket connection being achieved between the device 20 and the application server 40.

When the key (Ks_NAF) 90 is provided directly to the server 40, either from the API Hub 60 or from elsewhere, then the four steps shown in Figure 4 between the server 40 and the NAF push server 70 via the API hub 60 to validate the Ks_NAF and return the validation result are no longer necessary. This further increases the efficiency of the method. This alternative can be used for any security protocol implementation including the examples described with respect to any of figures 4, 5, 6 and 7. Security can be maintained in this example implementation as the server 40 may be provided with a pre-shared key (PSK) and so can receive further keys securely.

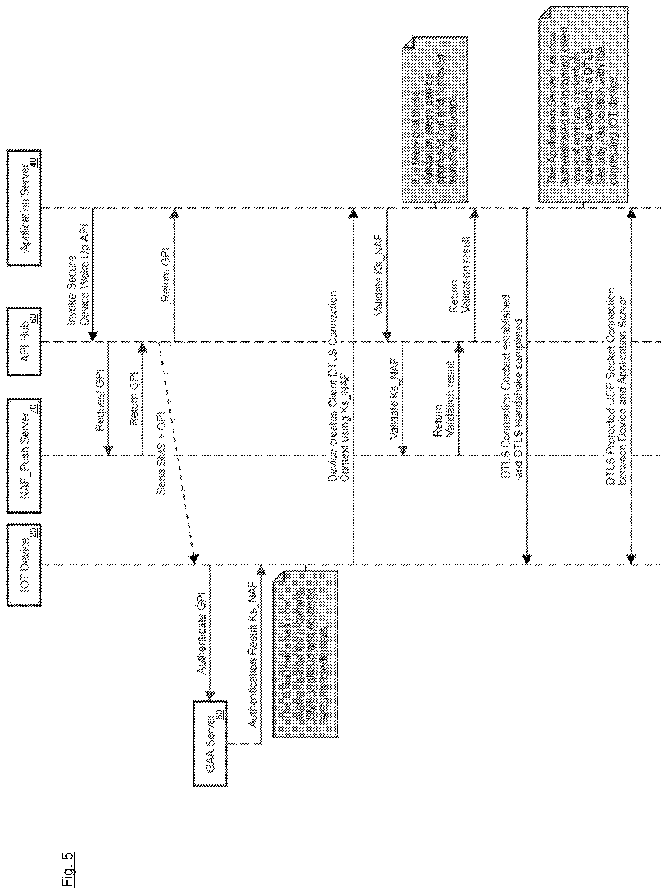

Figure 5 shows a sequence diagram of a similar method to that described with reference to Figure 4. However, instead of a TLS connection being established, a DTLS connection is established. As can be seen from Figure 5, a DTLS connection context is established and DTLS handshake completed following the wake-up message and enclosed GPI being sent to the loT device 20. A description of those same steps will not be repeated as these are the same as those described with reference to Figure 4, except using DTLS rather than TLS connections and context. As can be seen from Figure 5, the application server 40 and device 20 achieves a DTLS user datagram protocol (UDP) socket connection in which to complete any communications in a secure way. Again, no CA is required even though DTLS usually requires this.

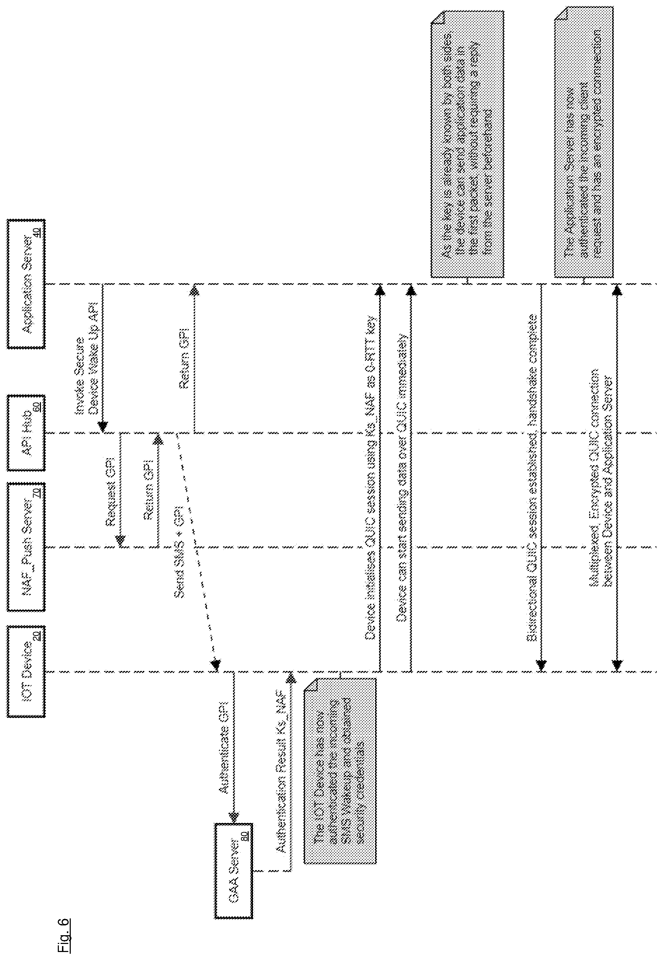

Figure 6 shows an alternative example implementation of the method 100 and described with reference to Figures 4 and 5 but resulting in a QUIC (Quick UDP Internet Connections) protocol session being established between the loT (or other) device 20 and the application server 40. Again, this figure includes the same steps as those described with reference to Figures 4 and 5 up until the point that the device 20 uses the GAA server 200 to authenticate the GPI received within the SMS. At this stage in the sequence, the device initiates a QUIC session using the Ks_NAF as a 0-RTT (zero round trip time) key. Using this method, the device can start sending data over the QUIC session immediately. This is because the key is already known by both the device 20 and the application server 40 without requiring a reply from the server 40 beforehand.

A bidirectional QUIC session is established and handshaking is completed. This results in a multiplexed and encrypted QUIC connection e.g. between the device 20 and the server 40.

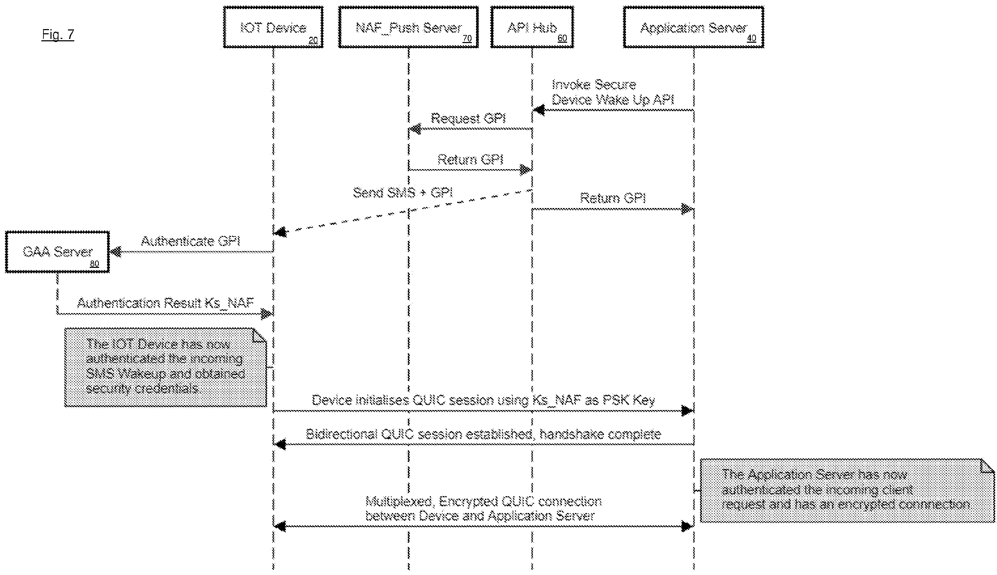

Figure 7 shows a sequence diagram of a similar method to that described with reference to Figure 6. However, in this example implementation, a QUIC session is implemented using a PSK. Again, up until the point in the method that the loT device 20 uses the GAA server 200 to authenticate the GPI and obtain the Ks_NAF, the same method steps are carried out, as described with reference to Figures 4, 5 and 6. At this point in the process, the device 20 initialises a QUIC session using the Ks_NAF as the PSK. A bidirectional QUIC session is established and handshaking is completed resulting in a multiplexed and encrypted QUIC connection being achieved between the device 20 and the application server.

A UICC or SIM that is provisioned on the device 20 and may be used as a hardware token to manage security credentials and the derivation of security credentials. There is no need to provide keys (which presents a cryptographic challenge) for the secure communication between the device 20 and the server 40. The method can be used in any application that requires secure communications with low overheads and is particularly suitable for MEC (mobile edge computing).

Further advantages of the described system and method over a client-driven approach include:
1. The device 20 does not need to support Ua or Ub flows, reducing the complexity of the device solution and the need for a dual APN.
2. The device 20 does not need to support a GAA Server - it still requires some GAA type functions but these are much simpler.
3. The application flows can be incorporated into SSL library functions - i.e., once the device has a GPI packet, it can use that packet as an parameter into the TLS handshake (or other certificate-based security protocol) and from a device coding perspective that is all that is needed. The SSL library may also have support added for the GBA flows.
4. Users (e.g. commercial entities) may be provided with an extended SSL library function to be deployed on both devices 20 and application servers 40.
5. The device 20 does not need to exchange certificates with the server 40 or walk the CA chain. This reduces the amount of data to be transmitted and the required power budget.
6. The system and method can support TLS1.3 or other security protocols.
7. The system and method can support UDP and TCP/IP transport protocols.

The GPI contains enough information for the SIM, UICC or USIM in the device 20 to generate the Ks and for the GAA server 80 to generate a corresponding Ks_NAF. This is similar to the same key derivation used for regular GBA.

The computer system and architecture may include a processor such as a central processing unit (CPU). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

As will be appreciated by the skilled person, details of the above embodiment may be varied without departing from the scope of the present invention, as defined by the appended claims.

For example, the device or client may prompt or issue a wake-up request itself. The server 40 may carry out a validation request before proceeding to accept the TLS (or any other) handshake as part of the setting up of the secure communication channel. Furthermore, in a similar way to the server 40 carrying out the steps to validate a new Ks_NAF with the NAF push server 70 via the API hub 60 (or otherwise) shown in Figures 4 and 5, the server 40 may inquire as to the whether an earlier acquired Ks_NAF has expired, is about to expire or has been revoke. Should such a situation arise (i.e. a new Ks_NAF is determined to be required) then this could trigger the server 40 to obtain a new Ks_NAF from the NAF push server 40 (or more simply trigger the new Ks_NAF to be sent to the server 40 as a response).

The GAA server (or component) may be implemented within the SIM, UICC or USIM (or into the modem) of the device 20 so there is less code needed to be installed on the device.

Within the TLS (and DTLS) process, the server 40 may use the Ks_NAF in conjunction with the NAF push server 70 to authenticate the incoming connection and derive keys on the server 40.

Other methods may be used to provide the server 40 with the key 90 to achieve the secure communication with the device 20. For example, the NAF push server 70 could return the GPI to the server 40 when the wake-up is initially triggered or alternatively the server 40 could be supplied with the GPI by a return pathway from the device 20.

An openssl driver library may implement the NAF push server 70 functionality, e.g. implemented as an extension and this could include also the GAA server functionality in openssl code.

Whilst one device and a single server is shown in the figures, networks or groups of devices, as well as more than one server or application server may be used with the described system and methods. Groups of devices may be managed or communicate with one or more servers, for example.

Following device wake-up, other actions may take place. For example, sensor or other data may be transmitted over the secure communication channel. Firmware updates may be made over the secure communications channel or other device management actions. These may include determinations regarding device operation (e.g. battery level, signal level, device health, etc.).

Whilst a wake-up message has been described, this may take the form of a message received over a particular interface (e.g. an SMS), have a particular message type or other attribute and can but not necessarily include an explicit designation or name of being a wake-up message.

The wake-up message may be initiated by the device itself. In this case, the device may issue a "wake me up message". This can be sent with the device in a particular low-power mode or otherwise, when using fewer resources than when actively sending data or other communications, for example. The server can determine which particular device is requesting to be woken up (e.g. cause it to become more active and transmit useful data again) in different ways. For example, the information used to determine the device may be the IMSI of its SIM or UICC.

This information may be sent explicitly from the device within a wake me up request. Alternatively, this information can be inferred indirectly. For example, the device (or the IMSI) may be determined when an access point name (APN) connection is set up and then communicated to the server, application or application server indirectly.

This has an advantage of reducing the data communications and activity (or power usage) on the device when opening and closing an APN connection, with no data transmission required. When a device opens a data connection, a request may be sent to Radius servers with the device's identity. The Radius (or other) server authenticates the connection and allocates some resources (e.g. IP address etc.) that the connection can use. The Radius server can then communicate to the NAF or API function, that a device with a specific IMSI has requested a "wake me up" process to take place.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for communicating between a device (20) and a server (40), the method comprising the steps of:
the server (40) initiating device wake-up;
obtaining, by a separate device (60), generic bootstrapping architecture, GBA, push information, GPI, including security credentials, wherein the separate device (60) is an application programming interface, API, hub separate from the server and the device;
sending, by the separate device (60), a device wake-up message to the device (20), wherein the device (20) wake-up message includes the GPI, where the server (40) initiates the device (20) wake-up message by issuing an application programming interface, API, instruction to the separate device (60), wherein the GPI is obtained by the separate device (60) in response to receiving the API instruction from the server (40);
authenticating, by the device (20) and/or the server (40), the security credentials within the GPI to obtain a key; and
establishing a secure communication channel between the device (20) and the server (40) using the obtained key, wherein the secure communication channel uses a certificate-based protocol and the obtained key is used in place of certificate authentication.

2. The method of claim 1, wherein the GPI is obtained from a network application function, NAF, and wherein the wake-up message is a SMS message.

3. The method according to any previous claim further comprising the step of:
in response to receiving the wake-up message the device (20) changes state before establishing the secure communication channel, wherein the device (20) changes state from a first power state to a second power state, wherein the power used by the device (20) in the first power state is less than the power used by the device (20) in the second power state.

4. The method according to any previous claim, wherein the device (20) is a machine to machine, M2M, device, and wherein the established secure communication channel is TLS, SSL, DTLS, QUIC, QUIC PSK, or QUIC 0-RTT.

5. The method according any previous claim, wherein the step of authenticating the security credentials within the GPI to obtain the key further comprises the steps of the device (20) authenticating the GPI with a bootstrapping sever function, BSF, and on successful authentication receiving the key from the BSF, and wherein the server (40) is a device manager, DM, server.

6. The method according to any previous claim, wherein the wake-up message is initiated at predetermined intervals and/or on expiry of a previously obtained key.

7. The method according to any previous claim, wherein the server (40) initiates the device wake-up message in response to a request originating at the device (20), the method further comprising the steps of the device (20) sending the server (40) a wake me up message when in a low powered state, the low powered state being at a power lower than an operating power.

8. The method according to any previous claim, wherein the wake-up message includes data indicating a wake-up delay, the method further comprising the step of the device (20) delays establishing the secure communication channel with the server (40) for a period based on the data indicating the wake-up delay.

9. The method according to any previous claim, wherein the wake-up message includes data indicating a wake-up type of a plurality of wake-up types, the method further comprising the step of establishing the secure communication channel between the device (20) and the server (40) according to a procedure determined by the wake-up type within the wake-up message.

10. The method according to any previous claim, wherein the step of establishing the secure communication channel between the device (20) and the server (40) further comprises providing the server (40) with an identifier of the device (20).

11. The method according to any previous claim, wherein the wake-up message is re-sent to the device (20) or a new wake-up message is sent to the device (20) if the device (20) fails to respond within a predetermined time, and further wherein the message is associated with a timestamp, the method further comprising the step of triggering the wake-up message to be resent or a new wake-up message to be sent to the device (20) if the server (40) does not have a record of the establishment of the secure communication within the predetermined time from the timestamp.

12. A system comprising means for carrying out the steps of the method of any previous claim.

13. The system of claim 12 comprising:
a server (40); and
one or more devices (20).

14. The system of claim 11 or claim 12 further comprising:
an application programming interface, API, hub configured to receive from the server (40) a command to initiate the device wake-up message and in response send the device wake-up message to the device (20); and
a network application function, NAF, configured to provide the GPI.

15. A computer program comprising instructions which, when the program is executed by a computer, cause the computer to carry out the steps of the method according to any of claims 1 to 11.

## Patentansprüche

1. Verfahren zum Kommunizieren zwischen einer Vorrichtung (20) und einem Server (40), wobei das Verfahren die Schritte umfasst von:
Einleiten eines Aufweckens der Vorrichtung durch den Server (40);
Abrufen, durch eine separate Vorrichtung (60), von Pushinformationen einer generischen Bootstrappingarchitektur (Generic Bootstrapping Architecture, GBA, Push Information, GPI), die Sicherheitsanmeldedaten beinhalten, wobei es sich bei der separaten Vorrichtung (60) um einen Anwendungsprogrammierschnittstellenhub (Application Programming Interface, API-Hub) handelt, der von dem Server und der Vorrichtung getrennt ist;
Senden, durch die separate Vorrichtung (60), einer Aufwecknachricht für die Vorrichtung an die Vorrichtung (20), wobei die Aufwecknachricht für die Vorrichtung (20) die GPI beinhaltet, wobei der Server (40) die Aufwecknachricht für die Vorrichtung (20) einleitet, indem eine Anweisung einer Anwendungsprogrammierschnittstelle (Application Programming Interface, API) an die separate Vorrichtung (60) ausgegeben wird, wobei die GPI als Antwort auf das Empfangen der API-Anweisung von dem Server (40) durch die separate Vorrichtung (60) abgerufen werden;
Authentifizieren, durch die Vorrichtung (20) und/oder den Server (40), der Sicherheitsanmeldedaten innerhalb der GPI, um einen Schlüssel abzurufen; und
Einrichten eines sicheren Kommunikationskanals zwischen der Vorrichtung (20) und dem Server (40) mittels des abgerufenen Schlüssels, wobei der sichere Kommunikationskanal ein zertifikatbasiertes Protokoll verwendet und der abgerufene Schlüssel anstelle einer Zertifikatauthentifizierung verwendet wird.

2. Verfahren nach Anspruch 1, wobei die GPI von einer Netzwerkanwendungsfunktion (Network Application Function, NAF) abgerufen werden und wobei es sich bei der Aufwecknachricht um eine SMS-Nachricht handelt.

3. Verfahren nach einem vorstehenden Anspruch, ferner umfassend den Schritt:
als Antwort auf das Empfangen der Aufwecknachricht, Ändern, durch die Vorrichtung (20), des Zustands vor dem Einrichten des sicheren Kommunikationskanals, wobei die Vorrichtung (20) den Zustand von einem ersten Leistungszustand in einen zweiten Leistungszustand ändert, wobei die durch die Vorrichtung (20) im ersten Leistungszustand verwendete Leistung geringer ist als die durch die Vorrichtung (20) im zweiten Leistungszustand verwendete Leistung.

4. Verfahren nach einem vorstehenden Anspruch, wobei es sich bei der Vorrichtung (20) um eine Maschine-zu-Maschine-Vorrichtung (Machine to Machine, M2M-Vorrichtung) handelt und wobei der eingerichtete sichere Kommunikationskanal TLS, SSL, DTLS, QUIC, QUIC PSK oder QUIC 0-RTT ist.

5. Verfahren nach einem vorstehenden Anspruch, wobei der Schritt des Authentifizierens der Sicherheitsanmeldedaten innerhalb der GPI zum Abrufen des Schlüssels ferner die Schritte umfasst, dass die Vorrichtung (20) die GPI mit einer Bootstrappingserverfunktion (Bootstrapping Server Function, BSF) authentifiziert und bei erfolgreicher Authentifizierung den Schlüssel von der BSF erhält, und wobei es sich bei dem Server (40) um einen Vorrichtungsverwaltungsserver (Device Manager, DM-Server) handelt.

6. Verfahren nach einem vorstehenden Anspruch, wobei die Aufwecknachricht in vorab festgelegten Zeitabständen und/oder bei Ablauf eines zuvor abgerufenen Schlüssels eingeleitet wird.

7. Verfahren nach einem vorstehenden Anspruch, wobei der Server (40) die Aufwecknachricht für die Vorrichtung als Antwort auf eine von der Vorrichtung (20) ausgehende Anforderung einleitet, wobei das Verfahren ferner die Schritte umfasst, dass die Vorrichtung (20) dem Server (40) in einem stromsparenden Zustand eine Weckanforderung sendet, wobei der stromsparende Zustand eine Leistung aufweist, die niedriger als eine Betriebsleistung ist.

8. Verfahren nach einem vorstehenden Anspruch, wobei die Aufwecknachricht Daten beinhaltet, die eine Aufweckverzögerung angeben, wobei das Verfahren ferner den Schritt umfasst, dass die Vorrichtung (20) das Einrichten des sicheren Kommunikationskanals mit dem Server (40) um einen Zeitraum verzögert, der auf den die Aufweckverzögerung angebenden Daten basiert.

9. Verfahren nach einem vorstehenden Anspruch, wobei die Aufwecknachricht Daten beinhaltet, die eine Aufweckart aus einer Vielzahl an Aufweckarten angeben, wobei das Verfahren ferner den Schritt umfasst, dass der sichere Kommunikationskanal zwischen der Vorrichtung (20) und dem Server (40) entsprechend einem durch die Aufweckart innerhalb der Aufwecknachricht festgelegten Verfahren eingerichtet wird.

10. Verfahren nach einem vorstehenden Anspruch, wobei der Schritt des Einrichtens des sicheren Kommunikationskanals zwischen der Vorrichtung (20) und dem Server (40) ferner das Bereitstellen einer Kennung der Vorrichtung (20) an den Server (40) umfasst.

11. Verfahren nach einem vorstehenden Anspruch, wobei die Aufwecknachricht erneut an die Vorrichtung (20) gesendet wird oder eine neue Aufwecknachricht an die Vorrichtung (20) gesendet wird, wenn die Vorrichtung (20) nicht innerhalb eines vorab festgelegten Zeitraums antwortet, und wobei die Nachricht ferner einem Zeitstempel zugeordnet wird, wobei das Verfahren ferner den Schritt umfasst, dass ein erneutes Senden der Aufwecknachricht oder das Senden einer neuen Aufwecknachricht an die Vorrichtung (20) ausgelöst wird, wenn der Server (40) innerhalb des vorab festgelegten Zeitraums ab dem Zeitstempel keinen Nachweis über die Einrichtung einer sicheren Kommunikation aufweist.

12. System umfassend Mittel zum Ausführen der Schritte des Verfahrens nach einem vorstehenden Anspruch.

13. System nach Anspruch 12, umfassend:
einen Server (40); und
eine oder mehrere Vorrichtungen (20).

14. System nach Anspruch 11 oder Anspruch 12, ferner umfassend:
einen Anwendungsprogrammierschnittstellenhub (Application Programming Interface, API-Hub), konfiguriert zum Empfangen, von dem Server (40), eines Befehls zum Einleiten der Aufwecknachricht für die Vorrichtung und, als Reaktion darauf, zum Senden der Aufwecknachricht für die Vorrichtung an die Vorrichtung (20); und
eine Netzwerkanwendungsfunktion (Network Application Function, NAF), konfiguriert zum Bereitstellen der GPI.

15. Computerprogramm umfassend Anweisungen, die bei Ausführung des Programms durch einen Computer veranlassen, dass der Computer die Schritte des Verfahrens nach einem der Ansprüche 1 bis 11 ausführt.

## Revendications

1. Procédé de communication entre un dispositif (20) et un serveur (40), le procédé comprenant les étapes consistant à :
lancer, par le serveur (40), un réveil de dispositif ;
obtenir, par un dispositif distinct (60), des informations push, GPI, d'architecture d'amorçage générique, GBA, comportant des authentifiants de sécurité, dans lequel le dispositif distinct (60) est un concentrateur d'interface de programmation d'application, API, distinct du serveur et du dispositif ;
envoyer, par le dispositif distinct (60), un message de réveil de dispositif au dispositif (20), dans lequel le message de réveil du dispositif (20) comporte les GPI, le serveur (40) lançant le message de réveil du dispositif (20) par émission d'une instruction d'interface de programmation d'application, API, vers le dispositif distinct (60), dans lequel les GPI sont obtenues par le dispositif distinct (60) en réponse à la réception de l'instruction API à partir du serveur (40) ;
authentifier, par le dispositif (20) et/ou le serveur (40), les authentifiants de sécurité au sein des GPI pour obtenir une clé ; et
établir un canal de communication sécurisée entre le dispositif (20) et le serveur (40) à l'aide de la clé obtenue, dans lequel le canal de communication sécurisée utilise un protocole basé sur certificat et la clé obtenue est utilisée au lieu d'une authentification par certificat.

2. Procédé selon la revendication 1, dans lequel les GPI sont obtenues à partir d'une fonction d'application de réseau, NAF, et dans lequel le message de réveil est un message SMS.

3. Procédé selon l'une quelconque des revendications précédentes comprenant en outre l'étape suivante :
en réponse à la réception du message de réveil le dispositif (20) change d'état avant l'établissement du canal de communication sécurisé, dans lequel le dispositif (20) change d'état d'un premier état de puissance à un deuxième état de puissance, dans lequel la puissance utilisée par le dispositif (20) dans le premier état de puissance est inférieure à la puissance utilisée par le dispositif (20) dans le deuxième état de puissance.

4. Procédé selon l'une quelconque des revendications précédentes, dans lequel le dispositif (20) est un dispositif de machine à machine, M2M, et dans lequel le canal de communication sécurisée établi est TLS, SSL, DTLS, QUIC, QUIC PSK, ou QUIC 0-RTT.

5. Procédé selon l'une quelconque des revendications précédentes, dans lequel l'étape consistant à authentifier les authentifiants de sécurité au sein des GPI pour obtenir la clé comprend en outre les étapes consistant à authentifier, par le dispositif (20), les GPI avec une fonction de serveur d'amorçage, BSF, et lors de l'authentification réussie recevoir la clé à partir de la BSF, et dans lequel le serveur (40) est un serveur gestionnaire de dispositif, DM.

6. Procédé selon l'une quelconque des revendications précédentes, dans lequel le message de réveil est lancé à des intervalles prédéterminés et/ou à l'expiration d'une clé obtenue précédemment.

7. Procédé selon l'une quelconque des revendications précédentes, dans lequel le serveur (40) lance le message de réveil de dispositif en réponse à une demande provenant du dispositif (20), le procédé comprenant en outre les étapes consistant à envoyer, par le dispositif (20) au serveur (40) un message de réveil dans un état de basse puissance, l'état de basse puissance étant à une puissance inférieure à la puissance de fonctionnement.

8. Procédé selon l'une quelconque des revendications précédentes, dans lequel le message de réveil comporte des données indiquant un retard de réveil, le procédé comprenant en outre l'étape consistant à retarder, par le dispositif (20), l'établissement du canal de communication sécurisée avec le serveur (40) pendant une période sur la base des données indiquant le retard de réveil.

9. Procédé selon l'une quelconque des revendications précédentes, dans lequel le message de réveil comporte des données indiquant un type de réveil d'une pluralité de types de réveil, le procédé comprenant en outre l'étape consistant à établir le canal de communication sécurisée entre le dispositif (20) et le serveur (40) selon une procédure déterminée par le type de réveil au sein du message de réveil.

10. Procédé selon l'une quelconque des revendications précédentes, dans lequel l'étape consistant à établir le canal de communication sécurisée entre le dispositif (20) et le serveur (40) comprend en outre la fourniture au serveur (40) d'un identifiant du dispositif (20).

11. Procédé selon l'une quelconque des revendications précédentes, dans lequel le message de réveil est envoyé à nouveau au dispositif (20) ou un nouveau message de réveil est envoyé au dispositif (20) si le dispositif (20) échoue à répondre dans un temps prédéterminé, et en outre dans lequel le message est associé à une estampille temporelle, le procédé comprenant en outre l'étape consistant à déclencher le nouvel envoi du message de réveil ou l'envoi d'un nouveau message de réveil au dispositif (20) si le serveur (40) n'a pas d'enregistrement de l'établissement de la communication sécurisée dans le temps prédéterminé à partir de l'estampille temporelle.

12. Système comprenant des moyens destinés à effectuer les étapes du procédé de l'une quelconque des revendications précédentes.

13. Système selon la revendication 12 comprenant :
un serveur (40) ; et
un ou plusieurs dispositifs (20).

14. Système selon la revendication 11 ou la revendication 12 comprenant en outre :
un concentrateur d'interface de programmation d'application, API, configuré pour recevoir à partir du serveur (40) un ordre de lancement du message de réveil de dispositif et en réponse envoyer le message de réveil de dispositif au dispositif (20) ; et
une fonction d'application de réseau, NAF, configurée pour fournir les GPI.

15. Programme d'ordinateur comprenant des instructions qui, lorsque le programme est exécuté par un ordinateur, amènent l'ordinateur à effectuer les étapes du procédé selon l'une quelconque des revendications 1 à 11.
